# EUROPÄISCHE PATENTSCHRIFT

(11) **EP 1 048 441 B1**
(45) Veröffentlichungstag und Bekanntmachung des Hinweises auf die Patenterteilung: **06.02.2002**
(21) Anmeldenummer: 00107895.5
(22) Anmeldetag: 12.04.2000
(51) Int. Cl.: B29C 67/00, G05B 19/18

(54) **Verfahren zur Kalibrierung einer Vorrichtung zum Herstellen eines dreidimensionalen Objektes und Kalibrierungsvorrichtung**
Process for calibrating an apparatus for manufacturing three-dimensional objects and calibrating apparatus
Procédé d'étalonnage d'un appareil pour fabriquer des objets tridimensionnels et appareil d'étalonnage

(30) Priorität: 23.04.1999 DE 19918613
(43) Veröffentlichungstag der Anmeldung: 02.11.2000
(73) Patentinhaber: EOS GmbH ELECTRO OPTICAL SYSTEMS, 82152 Planegg (DE)
(72) Erfinder: Philippi, Jochen, 81541 München (DE); Lohner, Andreas, 85540 Haar (DE)
(74) Vertreter: Prüfer, Lutz H., Dipl.-Phys.

(56) Entgegenhaltungen:
- EP-A- 0 734 842
- WO-A-90/09559
- WO-A-94/15265
- WO-A-96/12217
- US-A- 4 660 981
- US-A- 5 133 987

## Beschreibung

Die vorliegende Erfindung betrifft ein Verfahren zur Kalibrierung einer Vorrichtung zum Herstellen eines dreidimensionalen Objektes, eine Kalibrierungsvorrichtung und ein Verfahren sowie eine Vorrichtung zum Herstellen eines dreidimensionalen Objektes.

Aus der EP 0 792 481 B1 ist eine Vorrichtung zum Herstellen eines dreidimensionalen Objektes und ein Verfahren zur Kalibrierung der Steuerung zur Ablenkung eines Laserstrahls für Rapid-Prototyping-Systeme bekannt. Bei diesem Verfahren wird ein Testbild durch Bestrahlen eines lichtempflindlichen Mediums mit einem Laserstrahl an vorgegebenen Soll-Positionen in Abhängigkeit von Positionskoordinaten erzeugt. Von diesem Testbild werden Ausschnitte digitalisiert und und die Abschnitte werden zu einem Gesamtbild zusammengesetzt. Durch Vergleichen der Ist-Positionen des Laserstrahles auf dem Gesamtbild mit den Positionskoordinaten können Korrekturdaten für die Steuerung berechnet und bereitgestellt werden. Da bei diesem Verfahren die genaue Position des lichtempfindlichen Mediums in dem Rapid-Prototyping-System nicht bekannt ist, kann keine absolute Kalibrierung der Steuerung durchgeführt werden. Dies ist besonders dann nachteilig, wenn mit dem Rapid-Prototyping-System ein Objekt auf einer vorgesinterten Platte gebildet wird, das nach seiner Fertigstellung zusammen mit der vorgesinterten Platte aus dem Rapid-Prototyping-Systen entnommen wird, wie dies in der EP 0 734 842 A beschrieben ist. Da keine absolut genaue Positionierung des zu bildenden Objekts auf der vorgesinterten Platte möglich ist, ist die Kompatibilität zu Folgeprozessen, beispielsweise die Nachbearbeitung in computergesteuerten Werkzeugmaschinen, erschwert.

Aus der WO 94/15265 ist ein Kalibrierungsverfahren für ein Rapid-Prototyping-System bekannt, bei dem eine Unterlage in dem Rapid-Prototyping-System relativ zu einem über das Scanner-System definierten Koordinatensystem ausgerichtet wird. Die Unterlage ist mit einer Vielzahl von quadratischen Tintenmarkierungen versehen. Der Laserstrahl wird jeweils auf die Mitte der einzelnen Quadrate gerichtet, so daß dort die Tinte entfernt wird. Die Unterlage wird anschließend digitalisiert und es wird der Mittelpunkt der einzelnen Quadrate und der Mittelpunkt der Strahlmarkierungen erfaßt und aus den Abweichungen werden Korrekturdaten gewonnen.

Aus der US 4,660,981 ist ein Verfahren und eine Vorrichtung zur Kalibrierung der Ablenkung eines Lichtstrahles bekannt, wobei ein in der Arbeitsoberfläche des Lichtstrahles angeordneter Rahmen verwendet wird, der eine Mehrzahl von Löchern aufweist. Unter jedem der Löcher ist ein lichtempfindlicher Detektor fest angeordnet. Wenn der Lichtstrahl auf eines der Löcher abgelenkt wird, wird ein Signal von dem Detektor erzeugt. Wenn dieses Signal nicht dem maximalen Signal entspricht, welches erzeugt wird, wenn der Lichtstrahl präzise durch das Loch hindurchtrifft, wird die Ablenkeinrichtung entsprechend nachgestellt.

Aufgabe der Erfindung ist es, ein verbessertes Verfahren zur Kalibrierung einer Vorrichtung zum Herstellen eines dreidimensionalen Objektes, eine verbesserte Vorrichtung und ein verbessertes Verfahren zur Herstellung eines dreidimensionalen Objektes sowie Mittel für das Verfahren und die Vorrichtung vorzusehen.

Die Aufgabe wird durch das Verfahren des Anspruchs 1 bzw. 6 bzw. 12, die Kalibrierungsvorrichtung des Anspruchs 7 oder die Vorrichtung des Anspruchs 11 gelöst.

Weiterbildungen der Erfindung sind in den Unteransprüchen angegeben.

In einer Weiterbildung des Verfahrens wird die Erzeugung des Testbildes und die Auswertung des Testbildes voneinander räumlich getrennt durchgeführt. In einer weiteren Weiterbildung des Verfahrens wird das digitalisierte Testbild mit den Positionskoordinaten verglichen und Korrekturdaten für die Steuerung der Bestrahlungseinrichtung auf der Grundlage der Vergleichsergebnisse berechnet und bereitgestellt. Die Digitalisierung wird bevorzugt mit einem Pixelscanner oder einer digitalen Kamera durchgeführt. In einer weiteren Weiterbildung erfolgt die Digitalisierung durch Aufnehmen mit einer Bildaufnahmeeinrichtung und anschließendem Digitalisieren mit einem Computer.

Als Referenzmerkmale werden bevorzugt Referenzmarkierungen verwendet, die entlang zweier Linien angeordnet sind, die einen Winkel einschließen, der bevorzugt 90° beträgt.

Bevorzugt sind die Referenzmerkmale eine Längsseite und eine Querseite der Kalibrierungsplatte.

Bevorzugt sind an der Unterseite der Kalibrierungsplatte Bohrungen zur Aufnahme von Justierstiften vorgesehen. Bevorzugt sind an der Unterseite der Kalibrierungsplatte Justierstifte vorgesehen.

Als Medium wird bevorzugt ein strahlungsempfindlicher Film verwendet, der auf der Oberseite der Kalibrierungsplatte aufgeklebt ist. In einer Weiterbildung ist die Kalibrierungsplatte größer als das Baufeld für das Objekt und der erste Bereich liegt außerhalb des Baufeldes, und der erste Bereich der Kalibrierungsvorrichtung, der mit optisch erfaßbaren Referenzmerkmalen versehen ist, liegt außerhalb des Baufeldes, wenn die Kalibrierungsplatte in der Vorrichtung zum Herstellen des Objekts angeordnet ist.

Die Kalibrierungsvorrichtung ist bevorzugt als Kalibrierungsplatte ausgebildet. Bevorzugt weist die Kalibrierungsplatte an ihrer Oberseite einen ersten Bereich auf, der mit optisch erfaßbaren Referenzmerkmalen versehen ist, und einen zweiten Bereich, in dem ein gegenüber der Strahlung der Bestrahlungseinrichtung empfindliches Medium angeordnet ist, wobei der erste Bereich und der zweite Bereich voneinander getrennt sind.

Weitere Merkmale und Zweckmäßigkeiten der Erfindung ergeben sich aus der folgenden Beschreibung von Ausführungsformen der Erfindung anhand der Figuren. Von den Figuren zeigen:
- Fig. 1: eine schematische Querschnittsansicht einer Vorrichtung zur Herstellung eines dreidimensionalen Objektes,
- Fig. 2: eine Draufsicht auf einen Plattformträger mit einer eingespannten Kalibrierungsplatte,
- Fig. 3: eine Querschnittsansicht des Plattformträgers mit der eingespannten Kalibrierungsplatte entlang der Linie III-III von Fig. 2.
- Fig. 4: eine Querschnittsansicht des Plattformträgers mit der eingespannten Kalibrierungsplatte entlang der Linie IV-IV von Fig. 2,

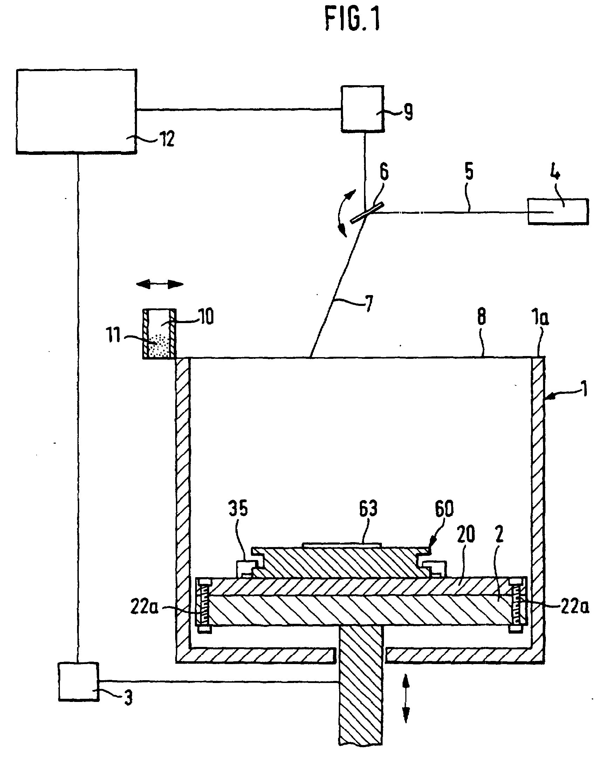

Wie in Fig. 1 gezeigt ist, weist ein Rapid-Prototyping-System, d.h. eine Vorrichtung zur Herstellung eines dreidimensionalen Objekts durch schichtweises Verfestigen eines Aufbaumaterials, einen an seiner Oberseite offenen Behälter 1 auf, in dem ein Objektträger mit einer Basisplatte 2 angeordnet ist, die über eine schematisch angedeutete Höheneinstellvorrichtung 3 in vertikaler Richtung in definierter Weise anhebbar und absenkbar ist. Die Vorrichtung weist ferner eine oberhalb des Behälters 1 vorgesehene Strahlungseinrichtung 4 in Form eines Lasers auf, die einen gerichteten Laserstrahl 5 abgibt. Dieser wird über eine Ablenkeinrichtung 6, beispielsweise in Form eines Drehspiegels, als abgelenkter Strahl 7 auf eine durch die Behälteroberkante 1a definierte Arbeitsebene 8 fokusiert. Die Strahlungseinrichung 4 und die Ablenkeinrichtung 6 bilden eine Bestrahlungseinrichtung. Eine Steuerung 9 steuert die Ablenkeinrichtung 6 derart, daß der abgelenkte Strahl 7 auf jede gewünschte Stelle innerhalb der Arbeitsebene 8 auftrifft. Es ist weiterhin eine Vorrichtung 10 zum Aufbringen einer gleichmäßigen Schicht eines durch Einwirkung elektromagnetischer Strahlung verfestigbaren Pulvermaterials 11 vorgesehen. Die Höheneinstellvorrichtung 3 und die Steuerung 9 für die Bestrahlungseinrichtung sind jeweils mit einer zentralen Steuer- und Regeleinheit 12 in Form eines Computers zur koordinierten Steuerung dieser Vorrichtung verbunden.

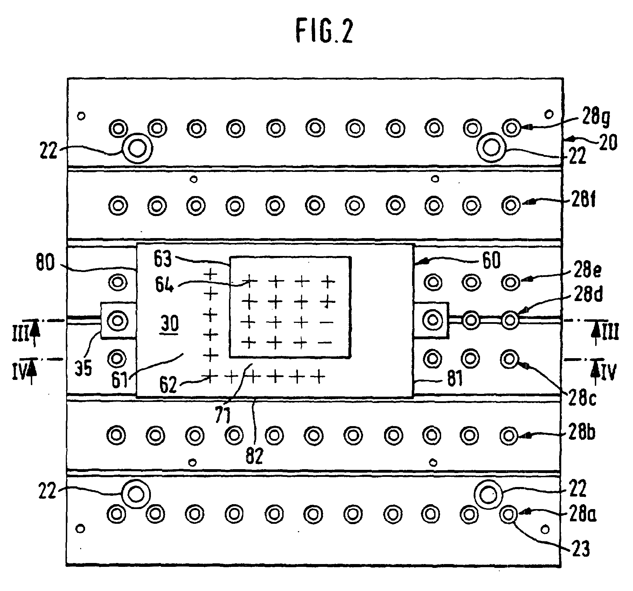

Auf der Oberseite der Basisplatte 2 ist ein Plattformträger in Form einer Platte 20 abnehmbar befestigt, beispielsweise mittels Schrauben 22a. Auf der Platte 20 ist eine Kalibrierungsvorrichtung, bevorzugt in Form einer Kalibrierungsplatte 60 angeordnet. Wie insbesondere aus Fig. 2 ersichtlich ist, ist in einem Abstand von jeder Ecke der Platte jeweils eine durchgehende Bohrung 22 zum Hindurchführen der Befestigungsschrauben 22a, mit denen die Platte 20 an der Basisplatte 2 befestigt ist, vorgesehen. Auf der Oberseite der Platte 20 ist eine Mehrzahl von tolerierten Paßbohrungen 23 vorgesehen. Die Paßbohrungen 23 weisen einen als Sackbohrung mit Gewinde ausgebildeten ersten Abschnitt 24 und einen daran koaxial anschließenden und sich bis zur Plattenoberfläche erstreckenden gewindelosen zweiten Abschnitt 26 auf. Der zweite Abschnitt 26 weist einen größeren Durchmesser als der erste Abschnitt 24 auf und dient zur Aufnahme von an der Unterseite der Kalibrierungsplatte 60 angebrachten Positionierstiften 27. Die Paßbohrungen 23 sind in einer Mehrzahl von zu einander parallelen Reihen 28a, 28b, ..., 28g vorgesehen. Innerhalb jeder Reihe 28a, 28b ...., 28g sind die Abstände von jeweils benachbarten Paßbohrungen 23 gleich.

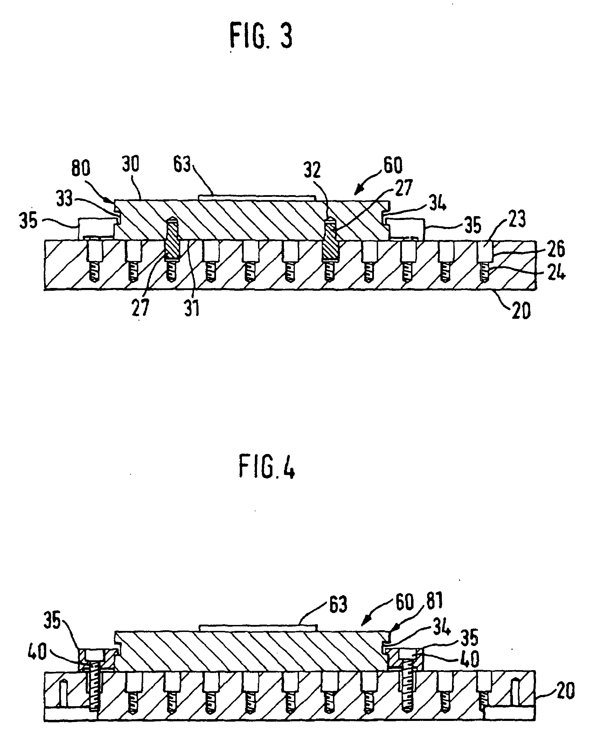

Wie es besonders aus den Fig. 2 bis 4 ersichtlich ist, ist die Kalibrierungsplatte 60 im wesentlichen quaderförmig ausgebildet mit einer Oberseite 30 und einer der Platte 20 im eingebauten Zustand zugewandten Unterseite 31. An der Unterseite 31 sind Sackbohrungen 32 zur paßgenauen Aufnahme der Positionierstifte 27 vorgesehen. Die Sackbohrungen 32 weisen einen Abstand voneinander auf, der dem Abstand der entsprechenden Paßbohrungen 23 auf der Platte entspricht, so daß die Kalibrierungsplatte 60 mittels der Positionierstifte 27 an gewünschten Positionen auf der Platte 20 positioniert werden kann. Bevorzugt sind an der Unterseite der Kalibrierungsplatte zwei Sackbohrungen 32 vorgesehen. An jeder Längsseite 80, 81 der Kalibrierungsplatte 60 ist eine im vorgegebenen Abstand zur Unterseite 31 verlaufende Nut 33, 34 mit rechteckigem Querschnitt vorgesehen, in die zur Arretierung der Kalibrierungsplatte vorgesehene Spannelemente 35 eingreifen, die mit in die Paßbohrung 23 eingeschraubten Schrauben 40 befestigt werden.

Die Kalibrierungsvorrichtung weist Referenzmerkmale auf, die optisch erfaßbar sind und geometrisch ausreichen, alle erforderlichen Bewegungsfreiheitsgrade festzulegen, beispielsweise eine x-Achse oder eine y-Achse eines rechtwinkligen Koordinatensystems. Bevorzugt sind die Referenzmerkmale Referenzmarkierungen.

Die Oberseite 30 der Kalibrierungsplatte 60 weist einen ersten Bereich 61 und einen davon getrennten zweiten Bereich 71 auf. Dieser erste Bereich 61 ist mit einer Mehrzahl von Referenzkreuzen 62 versehen. Jeweils benachbarte Referenzkreuze 62 weisen einen vorbestimmten Abstand auf. Weiterhin sind die Referenzkreuze 62 entlang zweier Linien angeordnet, die einen Winkel von 90° einschließen. Die Referenzkreuze 62 sind auf der Oberseite der Kalibrierungsplatte 60 beispielsweise aufgemalt.

In dem zweiten Bereich 71 ist ein für eine Wellenlänge des Laserlichtes und/oder eine bestimmte Laserleistung empfindliches Medium, bevorzugt ein lichtempfindlicher Film 63 angeordnet. Als lichtempfindlicher Film 63 ist beispielsweise Thermopapier oder UV-empfindliches Fotopapier geeignet. Der Film 63 ist auf der Oberseite 30 der Kalibrierungsplatte 60 fixiert. Dies wird beispielsweise durch Aufkleben des Filmes 63 erreicht.

Zur Kalibrierung der Steuerung der Bestrahlungseinrichtung wird auf der Platte 20 die Kalibrierungsplatte 60 positioniert, wie dies in den Figuren gezeigt ist. Dadurch ist die absolute Position der Kalibrierungsplatte 60 auf der Platte 20 festgelegt, und damit ist ebenfalls die absolute Position der Referenzkreuze 62 auf der Platte 20 eindeutig und reproduzierbar festgelegt. Somit definieren die Referenzkreuze 62 ein Maschinenkoordinatensystem auf der Platte 20 bwz. der Basisplatte. Dann wird die Basisplatte 2 so verfahren, daß die Oberseite 30 der Kalibrierungsplatte 60 in der Arbeitsebene 8 liegt. Anschließend wird der lichtempfindliche Film 63 durch Ablenken des Laserstrahls 5 über die Ablenkeinrichtung 6 an vorgegebenen Positionen auf dem Film 63 zum Erzeugen eines Testbildes bestrahlt. Die Ablenkung des Laserstrahls 5 mit der Ablenkeinrichtung 6 erfolgt dabei auf der Grundlage einer beispielsweise analytisch erzeugten Korrekturtabelle, welche die Zuordnung zwischen den an die Ablenkvorrichtung 6 anzulegenden Ablenkkoordinaten und den Ist-Koordinaten, d.h. den Auftreffpunkten des Laserstrahls 7 in der Arbeitsebene 8, angibt. Bevorzugt erfolgt die Bestrahlung des lichtempfindlichen Films in Form einer Mehrzahl von Justierkreuzen 64. Die Kreuzungspunkte der einzelnen Justierkreuze 64 sind dabei so angeordnet, daß sie ein Koordinatenraster von Ist-Koordinaten darstellen.

Die Erzeugung des Testbildes erfolgt in sehr kurzer Zeit, etwa in 30 Sekunden oder weniger. In dieser Zeit ist die Wahrscheinlichkeit für eine erhebliche Drift des Lasers 4 oder der Ablenkeinrichtung 6 sehr gering. Daher wird ein stationärer Zustand des Lasers 4 und der Ablenkeinrichtung 6 im Testbild festgehalten.

Als nächstes wird die Oberseite 30 der Kalibrierungsplatte 60, d.h. der erste Bereich 61 mit den Referenzkreuzen 62 und der zweite Bereich 71 mit dem Testbild auf dem Film 63, digitalisiert. Dies kann mittels eines Pixelscanners, einer Videokamera mit anschließender Digitalisierung oder auch einer digitalen Kamera durchgeführt werden. Die digitalisierte Oberseite 30 der Kalibrierungsplatte 60 wird dann in einem Auswertungsprogramm ausgewertet. Dabei wird durch einen Vergleich der Positionen der Justierkreuze 64 mit den Positionen der Referenzkreuze 62 eine Verschiebung oder Verdrehung des Belichtungskoordinatensystems, das durch die Justierkreuze 64 bestimmbar ist, gegenüber dem Maschinenkoordinatensystem ermittelt. Auf der Grundlage des Vergleichs kann dann die Korrekturtabelle modifiziert werden, so daß zwischen dem Belichtungskoordinatensystem und dem Maschinenkoordinatensystem Übereinstimmung besteht. Damit ist die Steuerung der Bestrahlungseinrichtung absolut kalibriert.

Weiterhin können mit dem Auswertungsprogramm durch ein Vergleich der vorgegebenen Koordinaten für die Justierkreuze 64 mit den digitalisierten Positionen der Justierkreuze sonstige Verzerrungen, die durch die Bestrahlungseinrichtung bedingt sind, ermittelt und in der Korrekturtabelle berücksichtigt werden.

Bei dem erfindungsgemäßen Verfahren zum Herstellen des dreidimensionalen Objektes werden zuerst die Geometrie des Objektes darstellende Daten in Form von CAD-Daten in einem objektbezogenen Koordinatensystem eingelesen. Dann wird das objektbezogene Koordinatensystem zu dem maschinenbezogenen Koordinatensystem ausgerichtet, wobei das virtuelle, über seine Daten definierte Objekt, in einem virtuellen Bauraum positioniert wird. Anschließend wird das Objekt in bekannter Weise Schicht für Schicht auf der Platte aufgebaut, wobei die Bestrahlungseinrichtung in Abhängigkeit von den die Geometrie des Objektes definierenden Daten gesteuert wird. Durch die zuvor beschriebene Kalibrierung der Vorrichtung ist der virtuelle Bauraum in Bezug auf die Vorrichtung absolut kalibriert.

Das Verfahren zum Kalibrieren einer Vorrichtung zum Herstellen eines dreidimensionalen Objekts und die Vorrichtung zum Kalibrieren sind besonders geeignet in dem Fall, in dem das Objekt aus einem Material hergestellt wird, welches mittels eines Lasers, dessen Wellenlänge im Infrarotbereich liegt, verfestigt wird, beispielsweise mit einem CO₂-Laser.

Mit einem so kalibrierten Rapid-Prototyping-System ist beim Bilden des dreidimenionalen Objekts eine absolute Positionierung des Objekts auf der Platte möglich. Durch die absolute Positionierung des Objektes auf der Platte wird das Objekt in einem definierten Koordinatensystem gebaut, welches in Folgeprozesse übertragen werden kann. Beispielsweise kann die gesamte Platte 20, wenn diese nach einer Norm gefertigt ist, wodurch sie in bekannte Vorrichtungen zur Nachbearbeitung des Objektes einsetzbar ist, zusammen mit dem Objekt nach Beendigung des Bauprozesses entnommen werden und in die Vorrichtung zur Nachbearbeitung eingesetzt werden. Beispielsweise kann eine solche Vorrichtung zur Nachbearbeitung eine CNC-gesteuerte Fräsmaschine sein. Durch die absolute Positionierung des Objektes auf der Platte ist somit auch die Positionierung des Objektes in dieser Vorrichtung zur Nachbearbeitung bekannt. In einer weiteren bevorzugten Ausführungsform wird das Objekt auf der Platte 20 derart aufgebaut, daß es auf einem separaten Sockel bzw. einer eigens dafür vorgesehenen Bauplattform gefertigt wird, die auf der Platte 20 z.B. über die Justierstifte, die in die tolerierten Paßbohrungen der Platte 20 eingesetzt sind, absolut positionierbar ist, wie die Kalibrierungsplatte. In einer Vorrichtung zur Nachbearbeitung, in der eine der Platte 20 äquivalente Platte vorgesehen ist, kann sodann das Objekt mitsamt Sockel an vorbestimmten und genau zum Maschinenrahmen definierten Positionen eingesetzt werden. Mehrere Objekte können durch Aufstecken mehrerer Bauplattformen auf die Platte 20 nebeneinander auf der Platte 20 aufgebaut werden.

In einer weiteren bevorzugten Ausführungsform ist der Sockel bzw. die Bauplattform bzw. die Platte 20 für bestimmte Anwendungen konstruiert, so daß sie in eine bestimmte Vorrichtung paßt oder mit bestimmten Elementen zusammengebaut werden kann. Beispielsweise kann das Objekt ein Teil einer Spritzgußform oder eines anderen Werkzeuges sein, wobei der Sockel bzw. die Bauplattform in ein Stammwerkzeug, in Werkzeugnormalien oder in eine dafür konstruierte Ausnehmung montiert wird. Das Objekt kann auch ein Teil eines größeren Objektes sein, wobei es über den Sockel bzw. die Bauplattform mit weiteren auf gleiche oder unterschiedliche Weise hergestellten Objekten zusammengebaut wird.

Die Erfindung ist nicht auf das zuvor beschriebene Ausführungsbeispiel beschränkt, sondern umfaßt auch andere Ausführungsformen, insbesondere die nachfolgend beschriebenen.

In einer weiteren Ausführungsform ist die Kalibrierungsplatte größer als das gesamte Baufeld des Rapid-Prototyping-Systems.

Bei dieser Kalibrierungsplatte deckt der Film das gesamte Baufeld ab und der erste Bereich mit den Justierkreuzen liegt außerhalb des Baufeldes. Dadurch kann in einem Schritt das gesamte Baufeld vermessen und absolut kalibriert werden.

In einer weiteren Ausführungsform sind die Längsseite 80 und eine daran anschließende Querseite 82 der Kalibrierungsplatte 60 mit hoher Präzision geschliffen. Die Referenzmerkmale der Kalibrierungsvorrichtung sind dann die präzisionsgeschliffenen Kanten, die als Justiermarken zum Festlegen des Maschinenkoordinatensystems dienen. Alternativ können auch an definierten Stellen angeordnete Bohrungen als Referenzmerkmale dienen.

In einer weiteren Ausführungsform weist die Kalibrierungsplatte in der Draufsicht einen quadratischen Querschnitt auf, wobei die Referenzmerkmale als zwei einen Winkel von 90° zueinander einschließenden Reihen von Kreuzmarkierungen ausgebildet sind und der zu belichtende Film in dem quadratischen Bereich dazwischen aufgeklebt wird. Die Kalibrierungsplatte ist mit Hilfe von drei Zylinderstiften, die in Referenzbohrungen der darunterliegenden Basisplatte gesteckt sind, genau positioniert. Die Kalibrierungsplatte muß nicht festgeschraubt oder zusätzlich befestigt werden, weil durch die Kalibrierung keine Kräfte entstehen.

Für den Fall der Verwendung eines Hochleistungslasers, z.B. beim Metallsintern, kann das Testbild direkt auf einer Metallplatte, die gegebenenfalls beschichtet ist, markiert werden.

Die zwei oben erwähnten Bereiche auf der Kalibrierungsvorrichtung müssen nicht getrennt sein. Beispielsweise können die Referenzmerkmale Linien oder Kreuze mit einem Winkel von 0° oder 90° zueinander sein und das Testbild kann aus Linien oder Kreuzen mit Winkeln von 45° und von 135° erzeugt werden. Es ist auch möglich, als Referenzmerkmale Linien oder Kreuze zu verwenden und als Testbild Kreise, deren Zentren auf den Kreuzungspunkten liegen sollen.

Das Digitalisieren und das Auswerten kann in dem Rapid-Prototyping-System oder in einer extern Vorrichtung mit separatem Computer durchgeführt werden.

## Patentansprüche

1. Verfahren zum Kalibrieren einer Vorrichtung zum Herstellen eines dreidimensionalen Objektes durch schichtweises Verfestigen eines unter Einwirkung eines gerichteten Energiestrahles verfestigbaren Materials an dem Querschnitt des Objektes in der jeweiligen Schicht entsprechenden Stellen, wobei das Objekt auf einer Platte aufgebaut wird, die ein relativ zu der Vorrichtung unveränderliches maschinenbezogenes Koordinatensystem definiert, mit den Schritten:
a) Bereitstellen von erfaßbaren Referenzmerkmalen auf der Platte, aus denen das maschinenbezogene Koordinatensystem berechnet wird;
b) Ablenken des gerichteten Energiestrahles an vorgegebene Sollpositionen in dem maschinenbezogenen Koordinatensystem;
c) Erfassen der Abweichung der Istpositionen des Auftreffpunktes des gerichteten Energiestrahles von den Sollpositionen unter Verwendung der Referenzmerkmale; und
d) Einstellen einer Steuerung zum Ablenken des gerichteten Energiestrahles in Abhängigkeit von den Abweichungen.

2. Verfahren nach Anspruch 1, **gekennzeichnet durch** die Schritte:
Anordnen einer Kalibrierungsvorrichtung (60) an einer bekannten Position in dem maschinenbezogenen Koordinatensystem, wobei die Kalibrierungsvorrichtung (60) einen ersten Bereich (61) und einen zweiten Bereich (71) aufweist, wobei der erste Bereich (61) mit optisch erfaßbaren Referenzmerkmalen (62; 80, 82) versehen ist und in dem zweiten Bereich (71) ein gegenüber der Strahlung einer Bestrahlungseinrichtung empfindliches Medium (63) angeordnet ist,
Erzeugen eines Testbildes **durch** Belichten des Mediums (63) **durch** die Strahlung der Bestrahlungseinrichtung an vorgegebenen Soll-Positionen in Abhängigkeit von Positionskoordinaten,
Digitalisieren des ersten Bereiches (61) der Kalibrierungsvorrichtung (60) mit den Referenzmerkmalen (62; 80, 82) und des zweiten Bereiches (71) der Kalibrierungsvorrichtung (60) mit dem Testbild,
Vergleichen der digitalisierten Referenzmerkmalen und des digitalisierten Testbildes und
Berechnen und Bereitstellen von Korrekturdaten für die Steuerung der Bestrahlungseinrichtung auf der Grundlage der Vergleichsergebnisse.

3. Verfahren nach Anspruch 2, **dadurch gekennzeichnet, daß**
als Kalibrierungsvorrichtung (60) eine Kalibrierungsplatte verwendet wird.

4. Verfahren nach Anspruch 2 oder 3, **dadurch gekennzeichnet,**
**daß** der erste Bereich neben oder unter dem zweiten Bereich angeordnet ist.

5. Verfahren nach einem der Ansprüche 2 bis 4, **dadurch gekennzeichnet, daß**
als Testbild eine Mehrzahl von Justierkreuzen (64) erzeugt werden, deren Kreuzungspunkte ein Koordinatenraster bilden.

6. Verfahren zum Herstellen eines dreidimensionalen Objektes durch schichtweises Verfestigen eines unter Einwirkung eines gerichteten Energiestrahles verfestigbaren Materials an dem Querschnitt des Objektes in der jeweiligen Schicht entsprechenden Stellen, wobei das Objekt auf einer Platte aufgebaut wird, die Referenzmerkmale aufweist, die ein maschinenbezogenes Koordinatensystem definieren und wobei in einem Folgeprozeß zur Bearbeitung bzw. Anwendung des Objektes das Objekt anhand der Referenzmerkmale der Platte ausgerichtet und/oder bearbeitet wird.

7. Kalibrierungsvorrichtung zur Verwendung bei der Kalibrierung der Steuerung einer Bestrahlungseinrichtung einer Vorrichtung zum Herstellen eines dreidimensionalen Objektes durch schichtweises Verfestigen eines unter Einwirkung eines gerichteten Energiestrahles verfestigbaren Materiales an dem Querschnitt des Objektes in der jeweiligen Schicht entsprechenden Stellen, wobei das Objekt auf einer Platte aufgebaut wird, die ein relativ zu der Vorrichtung unveränderliches maschinenbezogenes Koordinatensystem definiert, **dadurch gekennzeichnet, daß**
die Kalibrierungsvorrichtung (60) einen ersten Bereich (61) und einen zweiten Bereich (71) aufweist,
wobei der erste Bereich (61) mit optisch erfaßbaren Referenzmerkmalen (62; 80, 82) versehen ist,
wobei in dem zweiten Bereich (71) ein gegenüber der Strahlung der Bestrahlungseinrichtung empfindliches Medium (63) angeordnet ist und
wobei die Kalibrierungsvorrichtung (60) eine Justiereinrichtung (32, 27) aufweist, die das Anordnen der Kalibrierungsvorrichtung (60) an einer bekannten Position in dem maschinenbezogenen Koordinatensystem sicherstellt.

8. Kalibrierungsvorrichtung nach Anspruch 7, **dadurch gekennzeichnet, daß** die Kalibrierungsvorrichtung als eine Kalibrierungsplatte (60) ausgebildet ist.

9. Kalibrierungsvorrichtung nach Anspruch 7 oder 8, **dadurch gekennzeichnet, daß**
die Referenzmerkmale (62) entlang zweier Linien angeordnet sind, die einen Winkel einschließen, der bevorzugt 90° beträgt.

10. Kalibrierungsvorrichtung nach einem der Ansprüche 8 oder 9, **dadurch gekennzeichnet, daß**
das Medium (63) ein strahlungsempfindlicher Film ist, der auf der Oberseite (30) der Kalibrierungsplatte (60) aufgeklebt ist.

11. Vorrichtung zur Herstellung eines dreidimensionalen Objektes durch schichtweises Verfestigen eines unter Einwirkung eines gerichteten Energiestrahles verfestigbaren Materiales an dem Querschnitt des Objektes in der jeweiligen Schicht entsprechenden Stellen, mit
einem Träger (2, 20), der ein relativ zu der Vorrichtung unveränderliches maschinenbezogenes Koordinatensystem definiert,
einer den gerichteten Energiestrahl abgebenden Bestrahlungseinrichtung (4, 6), **gekennzeichnet durch**
einer auf dem Träger (2, 20) in einer bekannten Position in dem maschinenbezogenen Koordinatensystem angeordnete Kalibrierungsvorrichtung (60), die an ihrer Oberseite (30) einen ersten Bereich (61) und einen zweiten Bereich (71) aufweist,
wobei der erste Bereich (61) mit optisch erfaßbaren Referenzmerkmalen (63; 80, 82) versehen ist und in dem zweiten Bereich (71) ein gegenüber der Strahlung der Bestrahlungseinrichtung (4, 6) empfindliches Medium (63) angeordnet ist.

12. Verfahren zum Herstellen eines dreidimensionalen Objektes durch schichtweises Verfestigen eines unter Einwirkung eines gerichteten Energiestrahles verfestigbaren Materials an dem Querschnitt des Objektes in der jeweiligen Schicht entsprechenden Stellen, wobei das Objekt auf einer Platte aufgebaut wird, die Referenzmerkmale aufweist, die ein relativ zu der Vorrichtung unveränderliches maschinenbezogenes Koordinatensystem definieren, mit folgenden schritten:
a) Einlesen von die Geometrie des Objektes darstellenden Daten in einem objektbezogenen Koordinatensystem;
b) Ausrichten des objektbezogenen Koordinatensystems zu dem maschinenbezogenen Koordinatensystem; und
c) Schichtweises Aufbauen des Objektes auf der Platte.

## Claims

1. A method of calibrating an apparatus for producing a three-dimensional object by means of layer-by-layer consolidation of a material which can be consolidated under the action of a directed energy beam at locations corresponding to the cross section of the object in the respective layer, the object being constructed on a plate which defines a machine-based coordinate system that is invariant relative to the apparatus, having the following steps:
a) providing detectable reference features on the plate, from which the machine-based coordinate system is calculated;
b) deflecting the directed energy beam at predefined intended positions in the machine-based coordinate system;
c) registering the deviation of the actual positions of the point of incidence of the directed energy beam from the intended positions, using the reference features; and
d) setting a control system to deflect the directed energy beam on the basis of the deviations.

2. Method according to Claim 1, **characterized by** the steps:
arranging a calibration device (60) at a known position in the machine-based coordinate system, the calibration device (60) having a first region (61) and a second region (71), the first region (61) being provided with optically detectable reference features (62; 80, 82) and, in the second region (71), a medium (63) that is sensitive to the radiation from an irradiation device being arranged,
producing the test image by exposing the medium (63) by means of the radiation from the irradiation device at predefined intended positions as a function of position coordinates,
digitizing the first region (61) of the calibration device (60) by using the reference features (62; 80, 82) and the second region (71) of the calibration device (60) by using the test image,
comparing the digitized reference features and the digitized test image and
calculating and providing correction data for the control of the irradiation device on the basis of the comparison results.

3. Method according to Claim 2, **characterized in that** the calibration device (60) used is a calibration plate.

4. Method according to Claim 2 or 3, **characterized in that** the first region is arranged beside or below the second region.

5. Method according to one of Claims 2 to 4,
**characterized in that**
the test image produced is a plurality of adjustment crosses (64), whose crossing points form a coordinate grid.

6. Method of producing a three-dimensional object by means of layer-by-layer consolidation of a material which can be consolidated under the action of a directed energy beam at locations corresponding to the cross section of the object in the respective layer, the object being constructed on a plate which has reference features which define a machine-based coordinate system and, in a subsequent process for the processing or application of the object, the object being aligned and/or processed by using the reference features of the plate.

7. Calibration apparatus for use in calibrating the control system of an irradiation device of an apparatus for producing a three-dimensional object by means of layer-by-layer consolidation of a material which can be consolidated under the action of a directed energy beam at locations corresponding to the cross section of the object in the respective layer, the object being constructed on a plate which defines a machine-based coordinate system that is invariant relative to the apparatus, **characterized in that**
the calibration device (60) has a first region (61) and a second region (71),
the first region (61) being provided with optically detectable reference features (62; 80, 82),
in the second region (71), a medium (63) sensitive to the radiation from the irradiation device being arranged and
the calibration device (60) having an adjusting device (32, 27) which ensures the arrangement of the calibration device (60) at a known position in the machine-based coordinate system.

8. Calibration device according to Claim 7, **characterized in that** the calibration device is designed as a calibration plate (60).

9. Calibration device according to Claim 7 or 8, **characterized in that** the reference features (62) are arranged along two lines which include an angle which is preferably 90°.

10. Calibration device according to either of Claims 8 and 9, **characterized in that** the medium (63) is a radiation-sensitive film, which is adhesively bonded to the upper side (30) of the calibration plate (60).

11. Apparatus for producing a three-dimensional object by means of layer-by-layer consolidation of a material which can be consolidated under the action of a directed energy beam at locations corresponding to the cross section of the object in the respective layer, having
a carrier (2, 20), which defines a machine-based coordinate system that is invariant in relation to the apparatus,
an irradiation device (4, 6) emitting the directed energy beam,
**characterized by** a calibration device (60) which is arranged on the carrier (2, 20) in a known position in the machine-based coordinate system and which has, on its upper side (30), a first region (61) and a second region (71),
the first region (61) being provided with optically detectable reference features (63; 80, 82) and, in the second region (71), a medium (63) that is sensitive to the radiation from the irradiation device (4, 6) being arranged.

12. Method of producing a three-dimensional object by means of layer-by-layer consolidation of a material which can be consolidated under the action of a directed energy beam at locations corresponding to the cross section of the object in the respective layer, the object being constructed on a plate which has reference features which define a machine-based coordinate system that is invariant relative to the apparatus, having the following steps:
a) reading in data representing the geometry of the object in an object-based coordinate system;
b) aligning the object-based coordinate system with the machine-based coordinate system; and
c) constructing the object layer by layer on the plate.

## Revendications

1. Procédé d'étalonnage d'un appareil pour fabriquer des objets tridimensionnels par solidification par couches d'un matériau pouvant être solidifié par l'action d'un faisceau d'énergie dirigé en des points correspondant à la section de l'objet dans chaque couche, dans lequel l'objet est monté sur une plaque qui définit un système de coordonnées rapporté à la machine immuable par rapport à l'appareil, qui comprend les étapes de :
a) création sur la plaque d'éléments de référence détectables à partir desquels le système de coordonnées rapporté à la machine est calculé ;
b) orientation du faisceau d'énergie dirigé vers des positions nominales prédéterminées dans le système de coordonnées rapporté à la machine ;
c) détection de l'écart entre les positions réelles du point de contact du faisceau d'énergie dirigé et les positions de consigne à l'aide des éléments de référence ; et
d) réglage d'une commande pour l'orientation du faisceau d'énergie dirigé en fonction des écarts.

2. Procédé selon la revendication 1, **caractérisé en ce qu'**il comporte les étapes de :
disposition d'un dispositif d'étalonnage (60) en une position connue dans le système de coordonnées rapporté à la machine, lequel dispositif d'étalonnage (60) présente un premier secteur (61) et un deuxième secteur (71), le premier secteur (61) étant doté d'éléments de référence (62 ; 80, 82) détectables par des moyens optiques et un support (63) sensible au rayonnement du dispositif d'irradiation étant disposé dans le deuxième secteur (71),
génération d'une image test par exposition du support (63) au rayonnement du dispositif d'irradiation en des positions nominales prédéterminées en fonction des coordonnées de position,
numérisation du premier secteur (61) du dispositif d'étalonnage (60) portant les éléments de référence (62 ; 80, 82) et du deuxième secteur (71) du dispositif d'étalonnage (60) portant l'image test,
comparaison des éléments de référence numérisés et de l'image test numérisée, et calcul et fourniture de données de correction pour la commande du dispositif d'irradiation sur la base des résultats de la comparaison.

3. Procédé selon la revendication 2, **caractérisé en ce que** le dispositif d'étalonnage (60) utilisé est une plaque d'étalonnage.

4. Procédé selon la revendication 2 ou 3, **caractérisé en ce que** le premier secteur est disposé à côté du deuxième secteur ou sous celui-ci.

5. Procédé selon l'une ou l'ensemble des revendications 2 à 4, **caractérisé en ce que** l'image test se compose d'une pluralité de croix d'ajustement (64) dont les intersections forment une grille de coordonnées.

6. Procédé de fabrication d'un objet tridimensionnel par solidification par couches d'un matériau pouvant être solidifié par l'action d'un faisceau d'énergie dirigé en des points correspondant à la section de l'objet dans chaque couche, dans lequel l'objet est monté sur une plaque qui définit un système de coordonnées rapporté à la machine, dans lequel l'objet est orienté et/ou usiné en fonction des éléments de référence de la plaque dans une opération subséquente d'usinage ou d'utilisation de l'objet.

7. Dispositif d'étalonnage utilisable pour étalonnage de la commande d'un dispositif d'irradiation dans un appareil pour fabriquer un objet tridimensionnel par solidification par couches d'un matériau pouvant être solidifié par l'action d'un faisceau d'énergie dirigé en des points correspondant à la section de l'objet dans chaque couche, dans lequel l'objet est monté sur une plaque qui définit un système de coordonnées rapporté à la machine immuable par rapport à l'appareil, **caractérisé en ce que** le dispositif d'étalonnage (60) comprend un premier secteur (61) et un deuxième secteur (71), le premier secteur (61) étant doté d'éléments de référence (62 ; 80, 82) détectables par des moyens optiques et un support (63) sensible au rayonnement du dispositif d'irradiation étant disposé dans le deuxième secteur (71), le dispositif d'étalonnage (60) présentant un dispositif d'ajustement (32, 27) qui assure le positionnement du dispositif d'étalonnage (60) dans une position connue dans le système de coordonnées rapporté à la machine.

8. Dispositif d'étalonnage selon la revendication 7, **caractérisé en ce que** le dispositif d'étalonnage est conçu comme une plaque d'étalonnage (60).

9. Dispositif d'étalonnage selon la revendication 7 ou 8, **caractérisé en ce que** les éléments de référence (62) sont disposés le long de deux lignes qui forment un angle, de préférence de 90°.

10. Dispositif d'étalonnage selon l'une quelconque des revendications 8 ou 9, **caractérisé en ce que** le support (63) est un film sensible au rayonnement qui est collé sur la face supérieure (30) de la plaque d'étalonnage (60).

11. Dispositif pour la fabrication d'un objet tridimensionnel par solidification par couches d'un matériau pouvant être solidifié par l'action d'un faisceau d'énergie dirigé en des points correspondant à la section de l'objet dans chaque couche, avec un support (2, 20) qui définit un système de coordonnées rapporté à la machine immuable par rapport à l'appareil et un dispositif d'irradiation (4, 6) émettant un faisceau d'énergie dirigé, **caractérisé en ce qu'**il comporte un dispositif d'étalonnage (60) disposé sur le support (2, 20) dans une position connue dans le système de coordonnées rapporté à la machine, qui présente sur sa face supérieure (30) un premier secteur (61) et un deuxième secteur (71), le premier secteur (61) étant doté d'éléments de référence (62 ; 80, 82) détectables par des moyens optiques et un support (63) sensible au rayonnement du dispositif d'irradiation (4, 6) étant disposé dans le deuxième secteur (71).

12. Procédé pour la fabrication d'un objet tridimensionnel par solidification par couches d'un matériau solidifiable par l'action d'un faisceau d'énergie dirigé en des points correspondant à la section de l'objet dans chaque couche, dans lequel l'objet est fixé sur une plaque présentant des éléments de référence définissant un système de coordonnées rapporté à la machine immuable par rapport à l'appareil, lequel procédé comprend les étapes suivantes :
a) saisie des données représentant la géométrie de l'objet dans un système de coordonnées rapporté à l'objet ;
b) alignement du système de coordonnées rapporté à l'objet sur le système de coordonnées rapporté à la machine ; et
c) construction couche par couche de l'objet sur la plaque.
